# EUROPEAN PATENT APPLICATION

(11) **EP 0 965 767 A1**
(43) Date of publication of application: **22.12.1999**
(21) Application number: 99201898.6
(22) Date of filing: 15.06.1999
(51) Int. Cl.: F16B 13/00

(54) **Self-drilling insert**

(30) Priority: 15.06.1998 DK 79098
(71) Applicant: Tillegreen, Poul, 2950 Vedbaek (DK)
(72) Inventor: Tillegreen, Poul, 2950 Vedbaek (DK)
(74) Representative: Heiden, Finn

(57) **Abstract**

Self-drilling insert comprising a threaded part (3) and a drill section (8) having a conical point (13) extending centrally as well as having cutting means (11). The drill section (8) comprises at least three longitudinally extending ribs (14) at the end of which are arranged cutting means (11, 12, 17). The insert further comprises a hole (6) extending through the flange (5) and the threaded part (3) for the accommodation of a mounting screw.

A perfect drilling in of the insert is achieved as the cutting means are evenly supported during the drilling. Hereby a precise bore is drilled so that the threaded part of the insert is accommodated tightly and secure in the bore.

## Description

### BACKGROUND AND SUMMARY OF THE INVENTION

The present invention relates to a self-drilling insert comprising a threaded part with outer screw thread, and which at its first end is provided with a flange having an opening with slits for the accommodation of the point of a screwdriver, and which at its second end is provided with a drill section having a conical point extending centrally as well as having cutting means, further comprising a hole extending through the flange and the threaded part for the accommodation of a mounting screw.

Inserts of the above mentioned type are used as an anchor for the mounting of a screw in a porous wall, such as walls made of gypsum plate or light concrete.

However, plates made of gypsum material are not ideal for the mounting of items thereto, firstly because the gypsum plates is highly fragile or brittle, and are consequently easy to damage during mounting of items thereto. An inaccurate drilling in of an insert into such a gypsum plate will bring along a highly unreliable mounting. Furthermore, the gypsum plate is provided with a paper layer at the surface, which is to be drilled through for the insert to be screwed into the wall.

Inserts for the mounting of items to gypsumplates are known. An example thereof is described in NO FS 179685, which disclose an insert comprising a threaded part as well as a cutting section.

The above mentioned insert has a spade-shaped drill, which is provided with a double cutting edge and a central point, which parts are arranged as a thin, blade-like projection having a narrowing just after the threaded part. This type of cutting edges has the disadvantage, that the spade-shaped drill is exposed to, that the one of the sides of the cutting edge is pulling with higher resistance than the other side, with the consequence, that the cutting section is staggering so that the cutting edge tears the paper layer at the through drilling. This gives an inaccurate drilling in of the insert, whereby follows an unreliable mounting. In worst case, the cutting section jumps out of the hole damaging a larger area of the gypsum plate, which as a consequence must be repaired.

Another great disadvantage by the known inserts is, that if the insert is manufactured of plastic material such as nylon, a heating of the cutting section due to friction will bring along a self-increasing effect to the negative, as the culling edge is being demolished by the heating, and as the edge is being more blunt more and more heat is created, etc. This brings along an imprecise drilling in of the insert whereby follows an unreliable anchoring in the plate.

An alternative is to manufacture an insert of materials such as zinc, but it will bring along some unwanted characteristics, such as being expensive to manufacture and being more difficult to use. This is due to the requirement of use of another type of screw, so-called machine screws for the mounting of as the normally used wood screw or self-culling screws not is suited for being screwed into an insert made of zinc without the use of extensive force. When one has to exercise an excessive force for the screw to be screwed into the insert, the risk of the screw driver slips and makes deep marks or holes into the soft building elements is highly increased. Machine screws are more easily damaged at the tread, as it is provided as fine thread, and a damaged thread brings in this relation along a destroyed screw as well as a destroyed insert. When it then is necessary to replace the insert, a worse fit than before between insert and plate is then off-course the result.

It is important that the insert, which is being used may be used together with wood screws (screws with self-cutting thread), which are the type of screws, which is extensively used within the building area. The consequence is, that if an insert made of zinc is used, it is a must to have screws of different types and diameters within reach. The builder must then carry a larger selection of screws than he is used to.

Another problem arises, that when one has a screw which is too long in relation to the threaded part of the insert. By the prior self-cutting inserts disclosed in GB 2 275 979 is provided a short free passage behind the head of the bore section only. If one in this example tries to screw a screw which is longer than the insert, into the insert, the screw must off-course break through or in another manner remove the cutting section. However, as the cutting section must be strong at the point for being able to perform the necessary drilling through, the material that the insert is made of will slip where the self-cutting thread of the screw cuts into the inner side of the insert, whereby the engagement between screw and insert is reduced considerably. Furthermore, the extension of the "neck" of the insert between the cutting section and the threaded part may not be very short, as the insert in case of a longer extension thereof will be in great risk of pitching and as a consequence the drilling in will be inclined.

The purpose of the invention is to remedy these disadvantages experienced by the known inserts. This is obtained by the present invention as the drill section comprises at least three longitudinally extending ribs at the end of which are arranged cutting means. These ribs, are at their first ends joined with the threaded part, and are at their second ends joined together, so that their extension are parallel with the longitudinally extending centre line.

At the centre between the cutting means is provided a conical point extending in the drill direction, which together with the at least three ribs secures, that the drilling in becomes precise and easy to perform. The cutting means easily cuts through the paper layer with no tendency to pitching, so that the fit between the threaded part of the insert and the gypsum plate becomes optimal.

It is also very important, that no accumulation of released bore particles takes place as the material may be stuck between the drill section and the inner surfaces of the bore being drilled as the consequence will be an unreliable anchoring of the insert. This is achieved by the at least three longitudinally extending ribs, which provides a relatively open construction for giving space to the released bore material in combination with an excellent guidance of the drill section all the way through the plate without any tendency to slanting.

This is further improved by at least one longitudinally slit is provided between two adjacent ribs.

Furthermore, by the arrangement of the cutting means at the ends of the ribs are achieved strong cutting means as a relatively large amount of material is available behind the cutting edge and the trailing surface in relation to the prior known cutting means disclosed in NO FS 179 685. Furthermore is achieved a better conduct of heat away from the cutting means as the larger amount of material transports the heat away more easily.

When the cutting means comprise radial cutting edges extending from the periphery and inwardly towards the centre the efficiency of the cutting means becomes surprisingly high, and especially when a peripheral cutting edge is provided at the periphery at the intersection between a radial cutting edge and the peripheral side of the adjacent rib an even further improvement in cutting performance is achieved.

When according to a further embodiment of the invention, an angle lesser than 90° is enclosed at the intersection between a radial cutting edge and the peripheral side of the adjacent rib or when an angle lesser than 90° is enclosed at the intersection between a radial cutting edge and the peripheral cutting edge, a high cutting performance is combined with an efficient removal of released drill material and particles.

By testing the highest performance was achieved when a cutting point is provided at the periphery at the intersection between a radial cutting edge and the peripheral cutting edge, whereby a sham and clean bore was drilled as the waste material was in the form of an exactly cut roundel.

An improved guidance of the drill section is furthermore achieved when the peripheral side of the ribs are essentially parallel with the central axis of the insert.

When the hole is prolonged by a bore extending into the drill section, the builder may insert longer screws in the insert.

When at least one longitudinally extending slit is provided between two adjacent ribs thereby providing further opening between the outside and the bore, the waste material is transported away much easier.

### BRIEF DESCRIPTION OF THE DRAWINGS

A preferred embodiment of the insert according to the invention is described in the following by referral to the accompanying drawings.
Fig. 1 is a side view of the insert,
Fig. 2 is an end view of the insert according to fig. 1, seen from the point,
Fig. 3 is a 45° view of the insert, seen from the side,
Fig. 4 is a 45° view of the insert, seen from the point,
Fig. 5 is a sectional view of the insert taken along the line V-V of fig. 2, and
Fig. 6 is an end view of the insert taken from the flange at the top.

### DETAILED DESCRIPTION OF THE INVENTION

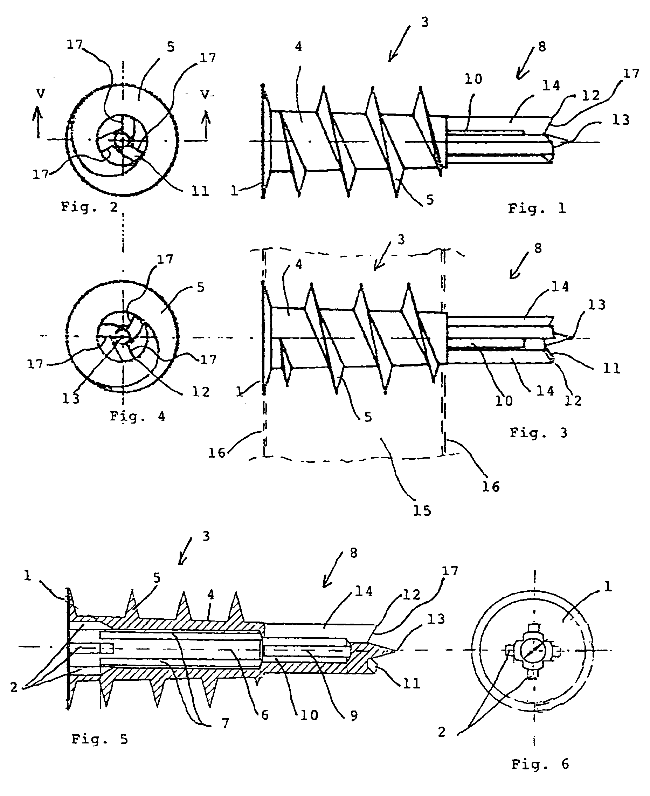

The insert, which is moulded in one piece of plastic material or a light metals alloy, comprises a flange 1 as disclosed in figures 1, 3, 5 and 6. At its end the flange is provided with an opening having slits 2 for accommodation of the cross blade of a screwdriver, a so-called cross-slot screwdriver.

The back of the flange extends into a threaded part 3 having an outer thread 5 provided on a core 4, which thread has a relatively large pitch.

At its interior the core 4 is provided with an axially extending hole 6, which at its side is provided with a projections 7, into which the threads of a mounting screw left out from the drawings may cut during the mounting.

The insert is furthermore provided with a drill section 8, which comprises three column-like rib parts 14, extending axially at the outside as disclosed in fig. 1 and 4.

These ribs are at their ends cut off for the provision of cutting edges 11 extending from the outside, where they are providing points with the intersection with a peripheral cutting edge 12 and inwardly. From the centre, a conical point 13 projects as disclosed in figures 2 and 4.

Furthermore, slits 10 are provided between the rib parts 14 providing openings from the outside and into a central bore 9, as disclosed in fig's 1, 3 and 5.

By mounting of the insert, the point 13 is located at the desired place of the dry wall 15, as suggested with the stippled line of fig. 3.

The point 13 cuts easily through the paper layer 16, and the same takes place when the cutting points 12 reaches the paper. These cutting points will easily and precisely cut out a roundel, which closely corresponds to the largest diameter part of the drill section 8. No more is being removed of the gypsum material.

When the parts of drill section 8 have come through the gypsum plate 15 and the paper layer 16 at the backside thereof, the threaded part 3 will easily cut into the gypsum with the threads 5 and maintain the insert with the flange pressed closely against the plate.

Hereby the insert is mounted, and a mounting screw not being disclosed at the drawings, may now be screwed into the hole 6. The screw may extend with its full length in the insert, and be maintained there in the hole 6 as well as further into the following bore 9.

## Claims

1. Self-drilling insert comprising a threaded part (3) with outer screw thread (5), and which at its first end is provided with a flange (5) having an opening with slits (2) for the accommodation of the point of a screwdriver, and which at its second end is provided with a drill section (8) having a conical point (13) extending centrally as well as having cutting means (11),
further comprising a hole (6) extending through the flange (5) and the threaded part (3) for the accommodation of a mounting screw, and
whereby the drill section (8) comprises at least three longitudinally extending ribs (14) at the end of which are arranged cutting means (11, 12, 17).

2. Self-drilling insert according to claim 1, whereby the cutting means comprise radial cutting edges (11) extending from the periphery and inwardly towards the centre.

3. Self-drilling insert according to claim 1, whereby a peripheral cutting edge (17) is provided at the periphery at the intersection between a radial cutting edge (11) and the peripheral side of the adjacent rib (14).

4. Self-drilling insert according to claim 1, whereby an angle lesser than 90° is enclosed at the intersection between a radial cutting edge (11) and the peripheral side of the adjacent rib (14).

5. Self-drilling insert according to claim 1, whereby an angle lesser than 90° is enclosed at the intersection between a radial cutting edge (11) and the peripheral cutting edge (17).

6. Self-drilling insert according to claim 1, whereby a cutting point (12) is provided at the periphery at the intersection between a radial cutting edge (11) and the peripheral cutting edge (17).

7. Self-drilling insert according to claim 1, whereby the peripheral side of the ribs (14) are essentially parallel with the central axis of the insert.

8. Self-drilling insert according to claim 1, whereby the cutting edges (11) being inclined in relation to perpendicular to the central axis of the insert.

9. Self-drilling insert according to claim 1, whereby the hole (6) is prolonged by a bore (9) extending into the drill section (8).

10. Self-drilling insert according to claim 1, whereby at least one longitudinally extending slit (10) is provided between two adjacent ribs (14) thereby providing further opening between the outside and the bore (9).
